Europäisches Patentamt

European Patent Office

Office européen des brevets

(11) Veröffentlichungsnummer: **0 522 251 A2**

# EUROPÄISCHE PATENTANMELDUNG

(21) Anmeldenummer: **92107257.5**

(22) Anmeldetag: **29.04.92**

(51) Int. Cl.5: **C08J 5/18**, C08L 67/07, C09J 7/02

(30) Priorität: **01.07.91 DE 4121702**

(43) Veröffentlichungstag der Anmeldung:
**13.01.93 Patentblatt 93/02**

(84) Benannte Vertragsstaaten:
**BE CH DE ES FR GB IT LI NL SE**

(71) Anmelder: **HÜLS AKTIENGESELLSCHAFT**
**- RSP Patente / PB 15 - Postfach 13 20**
**W-4370 Marl 1(DE)**

(72) Erfinder: **Huber, Hans-Friedrich, Dr.**
**Im Korresgarten 68**
**W-5204 Lohmar(DE)**
Erfinder: **Gurke, Thorsten**
**Siegburger Strasse 150**
**W-5330 Königswinter-Utweiler(DE)**
Erfinder: **Losensky, Hans-Willi, Dr.**
**Alte Holzgasse 8**
**W-5308 Rheinbach-Niederdrees(DE)**
Erfinder: **Müller, Hartmut, Dr.**
**Windsor Drive 34**
**Little Silver, N.J. 07739(US)**

(54) **Teilkristalliner Film auf der Basis von Polyester und dessen Verwendung für Klebematerialien.**

(57) Teilkristalline Filme, hergestellt durch Strahlenvernetzung von bei Raumtemperatur festen, teilkristallinen Polyestern mit Glasübergangstemperaturen unter - 20, besonders von -40 bis -90°C, Molmassen von 1.000 bis 10.000 und Schmelzwärmen von über 20 J/g, deren ursprünglich vorhandene Hydroxylgruppen zu 50% bis 90% in (Meth)acrylgruppen überführt worden sind, werden besonders als Trägermaterialien für selbstklebende Etiketten, Klebebänder bzw. Klebefolien verwendet.

EP 0 522 251 A2

Als Trägermaterialien für selbstklebende Filmetiketten, Klebebänder und Klebefolien werden üblicherweise Filme aus hochmolekularen, thermoplastischen Polymeren eingesetzt. Beispiele für solche Polymere sind Polyethylen, Polypropylen, Polyvinylchlorid, Polystyrol, Polyurethane, Polyethylenterephthalat u.ä. Aufgrund ihres thermoplastischen Verhaltens besitzen diese Filme allgemein keine gute Temperaturbeständigkeit. Als Ausnahmen können hierbei Polyimidfilme und eventuell noch Polyethylenterephthalatfilme angesehen werden, welche jedoch die für viele Anwendungen geforderte Elastizität vermissen lassen. Zudem sind solche Filme häufig schwer zu verarbeiten, d.h. schlecht zu bedrucken, zu beschichten oder zu verkleben. Von generellem Nachteil bei vorgefertigten Filmen ist der ungenügende Freiraum für den Hersteller sebstklebender Artikel bei der individuellen Gestaltung seiner Produkte.

In den letzten Jahren sind die Anforderungen an die Temperaturbeständigkeit von Trägermaterialien für Kleberschichten, aber auch von Filmen für andere Verwendungen, stetig gestiegen, so daß viele der thermoplastischen Filme den Ansprüchen nicht mehr genügen. Als Alternative zu solchen Filmen bietet sich daher die Vernetzung von reaktiven Polymeren an. Wesentlich einfacher als dies an vorgefertigten Filmen durchzuführen, ist die Methode, niedermolekulare Polymere auf eine Trägerbahn aufzubringen und anschließend entweder vor oder nach weiteren Veredlungsschritten zu hochmolekularen Filmen zu polymerisieren. Aufgrund ihrer kurzen Reaktionszeit bietet sich hierfür die Polymerisation(meth)acrylgruppenhaltiger Polymeren durch aktinische Bestrahlung an. Zur Initiierung der Polymerisation bzw. Vernetzung kann dabei die Bestrahlung mit kurzwelligem Licht (UV) oder der Beschuß mit schnellen Elektronen (EB) herangezogen werden.

An Versuchen, solche Filme aus polymerisationsfähigen Verbindungen herzustellen, hat es daher in der Vergangenheit nicht gefehlt. So führen z.B. die in den US-Patenten 4,008,115 und 4,022,926 beschriebenen Wege zwar zu hochvernetzten Polymeren mit guter Temperaturbeständigkeit. Diese sind jedoch aufgrund ihres hohen Vernetzungsgrades zu spröde, führen während der Polymerisation zu starker Schrumpfung und sind überdies schlecht zu beschichten und zu bedrucken.

Die in der DE-OS 39 31 890 beschriebenen vernetzten Folienbahnen auf Basis von verzweigten und amorphen, acrylgruppenhaltigen Copolyestern führen zu transparenten, flexiblen und temperaturbeständigen Filmen, sind jedoch aufgrund ihrer Verzweigung und hohen Glasübergangstemperatur in ihrer Elastizität und Dehnbarkeit beschränkt und aufgrund ihres amorphen Charakters nicht ausreichend in der wichtigen Beständigkeit gegenüber starken Lösungsmitteln.

Nachteilig wirkt sich zudem aus, daß bei zunehmender Elastizität amorpher Filme deren Steifigkeit abnimmt, was zu Problemen bei der Applikation von Etiketten führt. Der vor der Vernetzung amorpher Polymere bei Raumtemperatur vorhandene kalte Fluß erschwert zudem die Verarbeitung.

Es bestand daher die Aufgabe, polymerisationsfähige Polymere herzustellen, die leichter zu verarbeiten sind und nach erfolgter Vernetzung flexible Filme bilden, die gleichzeitig eine Bruchdehnung von mindestens 100% bei guter Steifheit und hoher Reißfestigkeit und bessere Lösungsmittelbeständigkeit aufweisen.

Gelöst wurde diese Aufgabe gemäß der Erfindung durch Verwendung von teilkristallinen, bei Raumtemperatur festen, im wesentlichen linearen Polyestern bzw. Copolyestern mit Glasübergangstemperaturen von unter -20°C und Schmelzwärmen von über 20 J/g, bevorzugt über 40 J/g, deren ursprünglich vorhandene Hydroxylgruppen zu 50% bis 90% zu (Meth)acrylgruppen umgesetzt worden sind. Die Polyester bzw. Copolyester sind sehr bevorzugt gesättigt, können im Grenzfall aber bis zu 10 Gew.-% ungesättigte Bestandteile enthalten.

Die Copolyester sind linear, d.h. sie besitzen überwiegend unverzweigte Ketten durch ausschließlichen Aufbau aus bifunktionellen Polyesterbestandteilen, d.h. Diolen und Dicarbonsäuren. Lineare Copolyester haben, bezogen auf die jeweilige Molmasse, ein Minimum von endständigen OH-Gruppen. Trifunktionelle Polyesterbausteine sind bis zu 3 Mol-% möglich. Die Hydroxylzahl beträgt 10 bis 100, vorzugsweise 20 bis 50. Da diese OH-Gruppen durch Acrylgruppen bzw. Methacrylgruppen nur zu 50 bis 90%, vorzugsweise zu 60 bis 80% ersetzt wird, ist die Zahl der (Meth)acrylgruppen limitiert. Zum anderen bleibt ein Teil der OH-Gruppen erhalten. Wir haben festgestellt, daß die Glasübergangstemperaturen Tg der Polyester unter -20°C, vorzugsweise zwischen -40°C und -90°C liegen müssen.

Teilkristalline Polyester bzw. Copolyester mit niedrigem Tg werden vorzugsweise aus nur einer bzw. mehr als 50 Mol-% einer aliphatischen Dicarbonsäure, ggf. nur einer oder einem Anteil einer aromatischen Dicarbonsäure sowie bevorzugt nur einem Alkandiol, d.h. mit einem einfachen, möglichst gleichmäßigen Aufbau der Polyesterkette, hergestellt. Sehr bevorzugt sind die Polyester aus nur einer einzigen aliphatischen Dicarbonsäure, d.h. einer mit $C_3$ bis $C_{12}$, und nur einem einzigen Diol, d.h. einem mit $C_2$ bis $C_{10}$ aufgebaut. Ätherdiole können mitverwendet werden.

Die Schmelzpunkte der teilkristallinen Polyester liegen über 40°C, bevorzugt über 60°C im Bereich 40 bis 120, vorzugsweise 60 bis 110°C. Die Umsetzung der Hydroxylgruppen zu (Meth-)acrylatgruppen erfolgt nach bekannten Verfahren, z.B. auf den in EP-OS 02 07 257 beschriebenen Wegen. Dabei erfolgt die Umsetzung der Polyester mit einer aus der OH-Zahl der Polyester und dem beabsichtigten Acrylierungsgrad A berechneten limitierten Menge Acrylat bzw. dem unten genannten Addukt mit einem notwendigen kleinen Überschuß. Bevorzugt erfolgt die Acrylierung der Hydroxy-Copolyester mit einem aliphatischen oder ggf. aromatischen Diisocyanat und einem Hydroxyalkyl(meth)acrylat, wobei aliphatische Diisocyanate und Hydroxyalkyl(meth)acrylat, besonders Hydroxyethylacrylat bevorzugt sind. Beide Stoffe werden zunächst zu einem Addukt im Molverhältnis Diisocyanat zu Hydroxyalkylacrylat von 1:0,6 bis 1:1,3 miteinander umgesetzt. Danach erfolgt die Umsetzung mit dem Copolyester. Die unterstöchiometrische Umsetzung führt zu am Polyester verbleibenden Hydroxylgruppen und zu Acrylgruppen bzw. Methacrylgruppen im Maße des genannten Acrylierungsgrades. Das trägt zu einer hohen Oberflächenspannung des vernetzten Films von über 40 mN/m bei und führt zu gut bedruckbaren, verklebbaren und beschichtbaren Filmen.

Die nicht umgesetzten Hydroxylgruppen können zu weiteren Umsetzungen herangezogen werden. Eine Überführung in nichtfunktionelle oder andere funktionelle Gruppen ist möglich, wobei beispielsweise Carboxylgruppen bevorzugt werden.

Aufgrund ihres teilkristallinen Charakters sind diese Polyester gegenüber den in DE-OS 39 31 890 beschriebenen bei Raumtemperatur fest and daher als Granulat verarbeitbar, was eine wesentliche Vereinfachung bei der Verarbeitung bringt.

Auch bei hoher Bruchdehnung und tiefer Glasübergangstemperatur besitzen diese Polyester nach ihrer Vernetzung die für die Applikation notwendige Steifigkeit, was mit amorphen Polyestern nicht möglich ist.

Da es sich bei den hier beschriebenen Polyestern um lineare handelt, fällt deren Schmelzviskosität oberhalb des Schmelzpunktes stärker als bei verzweigten Polyestern, was wiederum zu einer tieferen Verarbeitungstemperatur und besserer Beschichtungsqualität führen kann. Die Viskositäten dieser Polyester liegen bei der üblichen Verarbeitungstemperatur von 100°C zwischen 1 und 50 Pa.s, üblicherweise unter 20 Pa.s.

Eine Modifizierung der (meth)acrylgruppenhaltigen Polyester durch Zusatz von Additiven wie Stabilisatoren, Katalysatoren, Pigmenten, u.a. ist möglich. Die Herstellung des teilkristallinen Films erfolgt bei Temperaturen von 60-150ºC, bevorzugt zwischen 80ºC und 120ºC mit Hilfe von üblichen Auftragsverfahren, z.B. durch Walzenauftrag oder aus einer Schlitzdüse, auf eine Trägerbahn, die nach erfolgter Vernetzung mittels Elektronenbestrahlung oder UV-Licht wieder entfernt werden kann. Ein Aufbringen weiterer inerter oder polymerisationsfähiger Beschichtungen kann vor oder nach der Bestrahlung erfolgen. Zur Beschichtung mit Haftklebstoffen werden die in EP-OS 0 201 257 beschriebenen Makromere empfohlen.

Verwendet werden können die hier beschriebenen teilkristallinen Filme vorzugsweise zur Herstellung von Klebebändern, Filmetiketten, Klebefolien oder sonstiger selbstklebender Artikel. Eine in-situ Polymerisation der acrylierten Polyester zu Filmen auf einem Substrat, die zu einer permanenten Verankerung auf dem Substrat führt, ist ebenfalls ausführbar.

**Beispiele**

Herstellung der Polyester PES 1 bis PES 6:

Die Polyester werden entsprechend der in der Literatur beschriebenen Verfahren aus den in Tabelle 1 aufgeführten Diolen und Dicarbonsäuren durch Polykondensation unter Diolüberschuß hergestellt, wobei der Diolüberschuß während der Reaktion entfernt wird. Beschrieben sind solche Verfahren z.B. in EP-OS 0 201 257 oder DE-OS 39 31 890.

Acrylierung der Hydroxylpolyester PES 1 A bis PES 6A: Die Hydroxylpolyester PES 1 bis PES 6 werden entsprechend den in DE-OS 39 31 890 beschriebenen Verfahren mit Addukten aus Isophorondiisocyanat (IPDI) und 2-Hydroxyethylacrylat (HEA) (IPDI/HEA = 1/1,0) vermischt und bei Temperaturen von 100-120ºC umgesetzt. Bei Vernetzung mittels UV-Licht werden nach erfolgter Umsetzung 1-2 Gew.-% Photoinitiator zugesetzt.

Der Acrylierungsgrad der dann als PES A bezeichneten umgesetzten Polyester ist in Tabelle 2 aufgeführt.

Herstellung der Filme

Die Polyester (PES 1 A bis PES 6A) werden aufgeschmolzen und bei 100ºC mittels einer Schlitzdüse auf eine Siliconpapierbahn aufgebracht, wobei die Schichtdicke 50μm entspricht. Vernetzt wird mittels Elektronenbestrahlung mit einer Dosis von 60 KGray.

Tabelle 3 zeigt die Eigenschaften dieser teilkristallinen Filme, die deren Wert als hochwertige Trägerbahn für Folien, Etiketten und Klebebänder herausstellen.

Die Messung der Glasübergangstemperatur Tg und der Kristallitschmelzpunkt $T_m$ wird mittels DSC

(Differential Scanning Calorimetry) bestimmt.

Die Messung des Fließpunktes Fp der acrylierten Polyester erfolgt durch die Ring- und Kugel-Methode (Iso 4625). Die Schmelzwärmen $\Delta H_m$ werden aus der DSC-Analyse ermittelt.

Der MEK-Test kennzeichnet die Lösungsmittelbeständigkeit und wird durch Doppelhübe (DH) eines Stoffballens, der mit Methylethylketon (MEK) befeuchtet ist, ausgeführt. Gute Werte liegen über 30, sehr gute Werte über 50 Doppelhüben.

Die Oberflächenspannung (gemessen durch Benetzung mit Flüssigkeiten von bekannter Oberflächenspannung) soll wenigsten 40 mN/m betragen, wenn eine gute Bedruckbarkeit erzielt werden soll.

## Tabelle 1: Zusammensetzung und Eigenschaften der Hydroxylpolyester

| Polyester | AD | SEB | DDS | BSA | TPS | EG | BD | HD | OH-Zahl (mg KOH/g) | Tg (°C) | Tm (°C) |
|-----------|-----|-----|-----|-----|-----|-----|-----|-----|-----|-----|-----|
| PES 1 | 100 | | | | | | | 100 | 30 | – 60 | 55 |
| PES 1.1 | 100 | | | | | | | 100 | 13 | – 60 | 55 |
| PES 2 | | 100 | | | | | | 100 | 30 | – 80 | 65 |
| PES 3 | | | 100 | | | | | 100 | 30 | – 80 | 70 |
| PES 4 | | | | 100 | | 100 | | | 30 | – 20 | 45 |
| PES 5 | 100 | | | | | | 100 | | 30 | – 50 | 50 |
| PES 6 | 40 | | | | 60 | | | 100 | 30 | – 40 | 49 |

AD = Adipinsäure
SEB = Sebazinsäure
DDS = Decandicarbonsäure
BSA = Bernsteinsäureanhydrid
TPS = Terephthalsäure

EG = Ethylenglykol
BD = Butandiol
HD = Hexandiol

Tg = Glasübergangstemperatur
Tm = Kristallitschmelzpunkt

Summe aller Säuren und aller Diole
jeweils 100%

EP 0 522 251 A2

## Tabelle 2: Aufbau und Eigenschaften der acrylierten Polyester

| Polyester | Acrylierungsgrad* (%) | FP (°C) | $\Delta H_m$ (J/g) | $V_{100}$ (Pas) |
|---|---|---|---|---|
| PES 1 A | 70 | 60 | 59 | 3.5 |
| PES 1 A | 80 | 60 | 59 | 4.0 |
| PES 1 A | 90 | 60 | 59 | 4.5 |
| PES 1.1 A | 80 | 65 | 59 | 36 |
| PES 2 A | 80 | 70 | 91 | 4.8 |
| PES 3 A | 80 | 75 | 87 | 5.3 |
| PES 4 A | 80 | 95 | 48 | 9.4 (130°C) |
| PES 5 A | 80 | 58 | 43 | 4.7 |
| PES 6 A | 80 | 97 | 40 | 9.4 (130°C) |

* mit IPDI/HEA = 1/1.0

Fp = Fließpunkt, gemessen nach Ring und Kugel (Iso 4625)

EP 0 522 251 A2

**Tabelle 3: Eigenschaften der teilkristallinen Filme**

| Eigenschaft | Dimension | PES 1 A 70% | PES 1 A 80% | PES 1 A 90% | PES 1.1A 80% | PES 2 A 80% | PED 3 A 80% | PES 4 A 80% | PES 5 A 80% | PES 6 A 80% |
|---|---|---|---|---|---|---|---|---|---|---|
| Bruchdehnung X* | % | 280 | 260 | 200 | 340 | 130 | 130 | 210 | 200 | 220 |
| Reißfestigkeit X* | N/mm² | 16 | 15 | 17 | 15 | 16 | 24 | 22 | 16 | 16 |
| MEK-Test | DH | 30 | 30 | 30 | 30 | >100 | >100 | >100 | 20 | 30 |
| Oberflächen-spannung | mN/m | 40 | 42 | 42 | 42 | 42 | 44 | 38 | 42 | 40 |

X* nach DIN 53455

## Patentansprüche

1. Teilkristalliner Film, hergestellt durch Strahlenvernetzung von bei Raumtemperatur festen, teilkristallinen Copolyestern mit Glasübergangstemperaturen unter -20°C, Molmassen von 1.000 bis 10.000 und Schmelzwärmen von über 20 J/g, deren ursprünglich vorhandenen Hydroxylgruppen zu 50% bis 90% in Acrylgruppen bzw. Methacrylgruppen überführt worden sind.

7

**2.** Film nach Anspruch 1, dadurch gekennzeichnet, daß die Schmelzpunkte der Polyester über 40°C, bevorzugt über 60°C im Bereich von 40 bis 120°C, liegen.

**3.** Film nach Anspruch 1 oder 2, dadurch gekennzeichnet, daß in den Polyestern die Menge der Hydroxylgruppen den Hydroxylzahlen 10 bis 100, vorzugsweise 20 bis 50, entspricht.

**4.** Film nach einem der vorangehenden Ansprüche für die Verwendung als Trägerbahn für einseitige oder beidseitige Kleberschichten.

**5.** Film nach Anspruch 4 als Trägerbahn für Schichten aus einem Haftklebstoff für die Herstellung von Etiketten.

**6.** Verwendung der Folienbahn nach einem oder mehreren der Ansprüche 1 bis 5 als Trägerbahn für einseitige oder beidseitig Kleberschichten von Klebebändern.

**7.** Verfahren zur Herstellung einer Folienbahn als Trägerbahn mit Klebstoffschicht gemäß mindestens einem der vorangehenden Ansprüche durch flächiges Ausbringen der mit (Meth)acrylatverbindungen umgesetzten Copolyester oder deren Mischungen bei erhöhter Temperatur mit derselben Technik wie das Aufbringen von Klebstoffschichten.

**8.** Verfahren zur Herstellung einer Trägerbahn, dadurch gekennzeichnet, daß das flächige Ausbringen der mit (Meth)acrylatverbindungen umgesetzten Copolyester zur Trägerschicht und anschließend das Aufbringen einer Kleberschicht auf die verfestigte Trägerbahn und darauf das gemeinsame Härten beider Schichten durch Bestrahlung erfolgt.